# EUROPÄISCHE PATENTANMELDUNG

(11) **EP 0 608 907 A1**
(43) Veröffentlichungstag der Anmeldung: **03.08.1994**
(21) Anmeldenummer: 94102179.2
(22) Anmeldetag: 20.04.1991
(51) Int. Cl.: F41H 5/26, F41G 1/40

(54) **Winkelspiegel für Kampfpanzer**

(30) Priorität: 12.05.1990 DE 4015346
(62) Teilanmeldung aus: 91106392.3
(71) Anmelder: Wegmann & Co. GmbH, D-34127 Kassel (DE)
(72) Erfinder: Sprafke, Uwe, Dipl.-Ing., D-34270 Schauenburg-Elmshagen (DE)
(74) Vertreter: Feder, Wolf-Dietrich, Dr. Dipl.-Phys.

(57) **Zusammenfassung**

Ein Kampffahrzeug, insbesondere ein Kampfpanzer, mit einer im gepanzerten Gehäusedach (1) des Fahrzeugs angeordnete Luke (2). In unmittelbarer Umgebung der Luke (2) sind Winkelspiegel angeordnet, die jeweils ein im Außenraum angeordnetes Ausblickteil (11) und ein im Innenraum des Fahrzeugs angeordnetes Einblickteil (14) aufweisen. Zwischen Ausblickteil (11) und Einblickteil (14) ist ein durch das Gehäusedach (1) sowie einen auf das Gehäusedach (1) aufgesetzten Schutzblock (5) hindurchgeführter Sichtkanal (5.1) für den optischen Strahlengang angeordnet. Der Schutzblock (5) besteht aus passivem Material und ist mindestens auf einem Teil seiner Länge mit optischem Glas ausgefüllt, wobei sich an diesen Teil das Einblickteil (14) unmittelbar anschließt, während das Ausblickteil (11) als auf den Schutzblock (5) aufgesetzter Tubus ausgebildet ist. Der Schutzblock (5) kann aus einzelnen übereinandergestapelten Plattenelementen (5.2-5.8) aufgebaut sein. Das Ausblickteil (11) weist außer einer Ausblicköffnung (11.1) an der der Luke (2) zugewandten Seite eine Durchblicköffnung (11.2) auf. Dabei kann der im Ausblickteil (11) angeordnete Spiegel (15) entweder halbdurchlässig oder aus dem Strahlengang heraus bewegbar ausgebildet sein.

## Beschreibung

Die Erfindung betrifft ein Kampffahrzeug, insbesondere einen Kampfpanzer, mit einer im gepanzerten Gehäusedach des Fahrzeugs angeordneten Luke, bei dem in der unmittelbaren Umgebung der Luke Winkelspiegel angeordnet sind, die jeweils ein im Außenraum angeordnetes Ausblickteil und ein im Innenraum des Fahrzeugs angeordnetes Einblickteil aufweisen, wobei zwischen Ausblickteil und Einblickteil ein durch das Gehäusedach geführter Sichtkanal für den optischen Strahlengang angeordnet ist, wobei der Sichtkanal innerhalb eines auf das Gehäusedach aufgesetzten Schutzblockes aus passiven Material verläuft und mindestens auf einem Teil seiner Länge mit optischem Glas ausgefüllt ist, an den sich das Einblickteil unmittelbar anschließt, während das Ausblickteil an der Oberseite des Schutzblockes aufgesetzt ist.

Kampffahrzeuge mit einer Winkelspiegelanordnung sind an sich bekannt (siehe z.B. DE-33 05 883 A1).

Durch die Anordnung des Sichtkanals in einem eigenen Schutzblock und die mindestens teilweise Ausfüllung dieses Sichtkanals mit optischem, also durchsichtigem Glas wird erreicht, daß in diesem Bereich keine Lücken im Schutz auftreten. Es hat sich gezeigt, daß die teilweise Ausfüllung des Sichtkanals mit optischem Glas einen guten Schutz, insbesondere gegen Hohlladungen bildet. Bei einem Aufbau des Schutzblockes aus Plattenelementen kann man in besonders flexibler Weise den Anforderungen an die Schutzstärke gerecht werden und es läßt sich die Höhe des Schutzblockes so ausgestalten, daß das Ausblickteil in einer vorgegebenen Höhe über dem Lukenrand angeordnet ist, was zur Folge hat, daß bei geöffneter Luke der Kopf des Beobachters durch den Schutzblock gegen Beschuß von außen mindestens teilweise gesichert ist.

Der Erfindung liegt die Aufgabe zugrunde, ein Kampffahrzeug mit den eingangs erwähnten Merkmalen so auszubilden, daß bei geöffneter Luke auch dann, wenn der Kopf des Beobachters durch den Schutzblock gesichert ist, ein direkter Ausblick nach außen möglich ist.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den Unteransprüchen beschrieben.

Bei der erfindungsgemäßen Ausbildung des Ausblickteils des Winkelspiegels ist bei geöffneter Luke eine direkter Ausblick durch entsprechende im Ausblickteil vorgesehene Durchblicksöffnungen möglich.

Wie weiter unten anhand von Ausführungsbeispielen beschrieben, kann hierbei der direkte Ausblick durch die Durchblicköffnungen der Ausblickteile ermöglicht werden, indem entweder die in den Ausblickteilen angeordneten Spiegel in den zum Einblickteil laufenden Strahlengang hinein- und aus ihm herausbewegbar sind oder indem diese Spiegel in bekannter Weise als halbdurchlässige Spiegel ausgestaltet werden und beispielsweise Teil eines aus zwei Prismen aufgebauten, an sich bekannten Strahlteilers sein können. Im folgenden werden anhand der beigefügten Zeichnungen Ausführungsbeispiele für Kampffahrzeuge nach der Erfindung näher erläutert.

In den Zeichnungen zeigen:
- Fig. 1: in einer perspektivischen stark schematisierten Darstellung einen Teil des Gehäusedaches eines Kampfpanzers mit um eine Luke angeordneten Winkelspiegel;
- Fig. 2: einen Vertikalschnitt nach der Linie II-II in Fig. 1;
- Fig. 3: in einem vertikalen Teilschnitt eine Variante des Ausblickteils der Ausführungsform nach Fig. 2;
- Fig. 4: in einer Darstellung analog Fig. 3 eine weitere Variante des Ausblickteils der Ausführungsform nach Fig. 2;
- Fig. 5: in einer Darstellung analog Fig. 3 eine als Strahlteiler ausgebildete Variante des Ausblickteils nach Fig. 2.

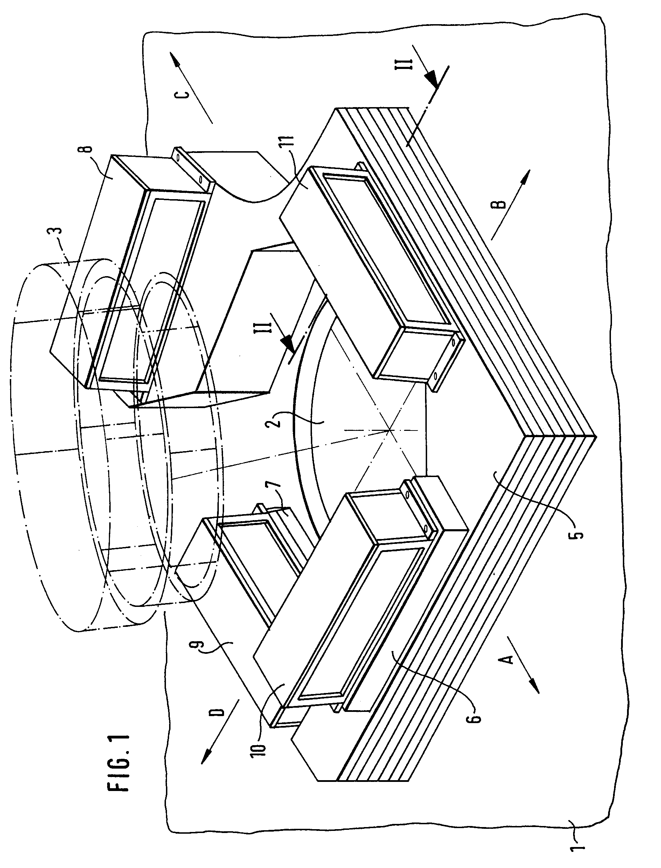

Fig. 1 zeigt einen Teil des Gehäusedachs 1 eines im übrigen nicht dargestellten Kampfpanzers in der Umgebung einer Luke 2, die mit einem gestrichelt angedeuteten Lukendeckel 3 verschließbar ist, der in üblicher Weise über eine nicht dargestellte Schwenkvorrichtung mit dem Gehäusedach 1 verbunden ist. In der Darstellung von Fig. 1 ist der Lukendeckel 3 teilweise angehoben, aber nicht weggeschwenkt oder weggeklappt gezeigt.

Um die Luke 2 herum sind insgesamt vier Winkelspiegel angeordnet.

Von diesen Winkelspiegeln sind in Fig. 1 lediglich die Ausblickteile 8 - 11 und in Fig. 2 das Ausblickteil 11 und das im Inneren des Kampfpanzers angeordnete Einblickteil 14 dargestellt. Bei allen Winkelspiegeln befindet sich zwischen dem Ausblickteil 8 - 11 und dem Einblickteil ein durch das Gehäusedach geführter Sichtkanal. Diese Sichtkanäle sind jeweils innerhalb eines auf das Gehäusedach 1 aufgesetzten Schutzblockes 5 aus passivem Material angeordnet. Wie Fig. 1 zu entnehmen umfaßt der Schutzblock 5 die Luke 2 in seiner vollen Höhe auf drei Seiten in den Richtungen A, B, C. Auf den Schutzblock 5 sind die Ausblickteile 8 und11 direkt aufgesetzt, während das Ausblickteil 10 unter Zwischenschaltung eines Zwischenstückes 6 aufgesetzt ist und somit höher steht als die Ausblickteile 8 und 11. An der noch verbleibenden Seite der Luke 2 in Richtung D ist ein niedrigerer Schutzblock 7 angeordnet, auf den das Ausblickteil 9 aufgesetzt ist. Der Schutzblock 5 setzt sich, wie weiter unten beschrieben, aus acht übereinandergestapelten Plattenelementen zusammen, während der Schutzblock 7 in der gleichen Weise nur zwei Plattenelementen aufgebaut ist, die gegebenenfalls einstückig mit den entsprechenden Plattenelementen des Schutzblocks 5 verbunden sein können.

Anhand von Fig. 2 wird nun der Aufbau des Winkelspiegels mit dem Ausblickteil 11 und dem Einblickteil 14 auf dem Schutzblock 5 näher erläutert. Die übrigen Winkelspiegel sind in analoger Weise aufgebaut.

Der auf das Gehäusedach 1 aufgesetzte Schutzblock 5 ist aus einzelnen übereinandergestapelten Plattenelementen 5.2 bis 5.8 aufgebaut, die entweder wie dargestellt mittels Schraubenbolzen 5.9 und 5.10 zusammengehalten oder in einem eigenen Gehäuse als Gesamtblock mit dem Gehäusedach 1 verschraubt sind. In den Schutzblock 5 ist der Sichtkanal 5.1 eingearbeitet, in den von unten vom Inneren des Kampfpanzers her das Einblickteil 14, das aus optischem Glas besteht, eingeschoben ist. Der Sichtkanal 5.1 entsteht durch Freilassen von entsprechenden Durchbrüchen in den Plattenelementen 5.2 bis 5.8. Selbstverständlich ist es auch möglich, die Plattenelemente 5.2 bis 5.8 ohne Durchbrüche herzustellen und sie dafür aus durchsichtigem Panzerglas auszubilden. In diesem Fall ergibt sich ein Sichtkanal, der mit optischem Glas ausgefüllt ist, das bereits einstückig mit dem Material des Schutzblockes verbunden ist. In diesem Fall wird das Einblickteil in nicht näher dargestellter Weise direkt von unten an das unterste Plattenelement angesetzt.

Das Einblickteil 14 besitzt eine Einblicköffnung 14.1 und ist mit einer Schutzkappe 14.2 versehen. Das Ausblickteil 11 ist als Tubus ausgebildet, der auf der Oberseite des Schutzblocks 5 aufgesetzt und mit diesem fest verbunden ist. Das Ausblickteil 11 besitzt an seiner nach außen gerichteten Vorderseite eine Ausblicköffnung 11.1 und an seiner der Luke 2 zugewandten Innenseite eine Durchblicköffnung 11.2. Diese beiden Öffnungen sind jeweils durch eine Scheibe aus durchsichtigem Material verschlossen. An seiner Oberseite ist das Ausblickteil 11 mit einem Deckel 11.3 fest abgeschlossen. Im Ausblickteil ist ein Spiegel 15 unter einem Winkel von 45° gegen die nach außen gerichtete Horizontale angeordnet, so daß der Strahlengang des Winkelspiegels aus der Richtung S von außen über den Spiegel 15 in Richtung S1 nach unten durch den Sichtkanay 5.1 verlaufend auf einen zweiten Spiegel 14.3 auftrifft, der im Einblickteil 14 unter einem Winkel von 135° zur nach innen gerichteten Horizontalen angeordnet ist und wird dort in Richtung zur Einblicköffnung 14.1 hin abgelenkt.

Wenn der Spiegel 15 als halbdurchlässiger Spiegel ausgebildet ist ergibt sich ein zweiter Strahlengang, der von außen in Richtung S durch den Spiegel 15 hindurch in Richtung S2 zur Durchblicköffnung 11.2 verläuft. Es kann in diesem Fall jederzeit sowohl durch die Einblicköffnung 14.1 als auch durch die Durchblicköffnung 11.2 beobachtet werden.

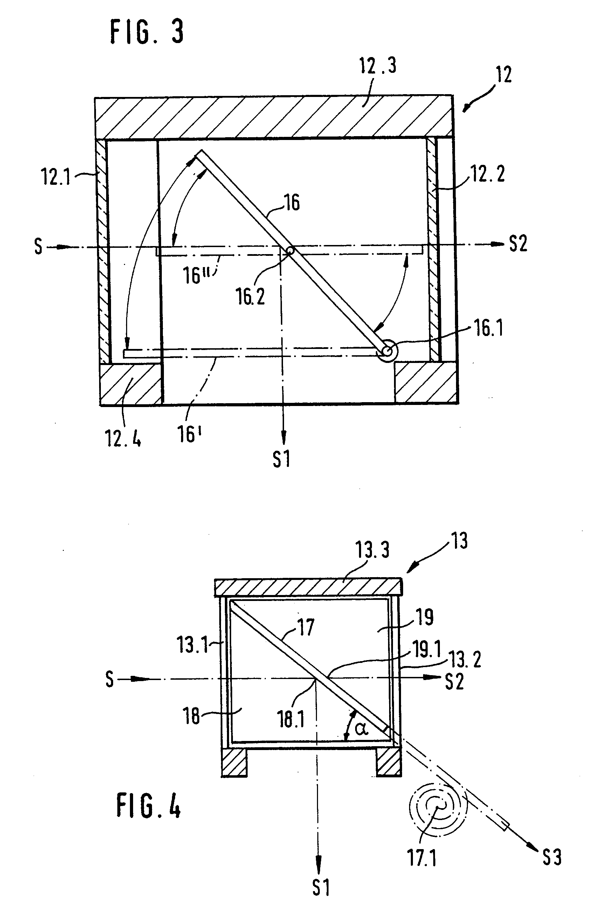

Wenn der Spiegel 15 nicht halbdurchlässig ausgebildet ist, muß er entweder so ausgebildet sein, daß ein Durchblick an ihm vorbei von der Durchblicköffnung 11.2 zur Ausblicköffnung 11.1 möglich ist oder er muß aus den Strahlengang des Winkelspiegels zeitweise entfernbar sein. Bei der Ausführungsform nach Fig. 3 ist ein Ausblickteil 12 in der gleichen Weise auf einen Schutzblock 5 aufgesetzt wie bei der Ausführungsform nach Fig. 2. Aus Gründen der Einfachheit ist dieser Schutzblock nicht dargestellt, sondern lediglich das Ausblickteil 12. Dieses besitzt eine mit einer Scheibe verschlossene Ausblicköffnung 12.1 und eine ebenfalls mit einer Scheibe verschlossene Durchblicköffnung 12.2. Der Tubus 12 ist an seiner Oberseite mit einem Deckel 12.3 abgeschlossen. Innerhalb des Ausblickteils 12 ist ein Spiegel 16 so angeordnet, daß er in einer ersten Position, die in Fig. 3 mit ausgezogenen Linien dargestellt ist, unter einem Winkel von 45° zur nach außen gerichteten Horizontalen steht und somit den von außen kommenden Strahlengang S in die Richtung S1 nach unten ablenkt. Bei einer ersten Variante dieser Ausführungsform ist der Spiegel 16 um eine Horizontale an seinem unteren Ende angeordnete Schwenkachse 16.1 nach unten in eine strichpunktiert angedeutete und mit 16' bezeichnete Position schwenkbar, in der er auf einem Anschlag 12.4 aufliegt. In dieser Position verläuft der von außen aus Richtung S kommende Strahlengang geradlinig weiter in Richtung S2 und es ist ein direkter Durchblick von der Durchblicköffnung 12.2zur Ausblicköffnung 12.1 möglich.

Das gleiche kann bei einer Variante der Ausführungsform erreicht werden, wenn der Spiegel 16 um eine in seiner Mitte angeordnete horizontale Achse 16.2 in eine ebenfalls strichpunktiert angedeutete und mit 16'' bezeichneten Position schwenkbar ist, in der ebenfalls der Strahlengang aus der Richtung S geradlinig durchgeht in die Richtung S2.

In Fig. 4 ist eine weitere Ausführungsform eines Ausblickteils dargestellt, bei der in dem auf den Schutzblock 5 aufgesetzten Ausblickteil 13, das an seiner Oberseite mit einem Deckel 13.3 abgeschlossen ist und eine Ausblicköffnung 13.1 sowie eine Durchblicköffnung 13.2 besitzt, ein Spiegel 17 angeordnet ist, der zur Umlenkung des Strahlengangs aus der Richtung S in die Richtung S1 nach unten, wie bereits erwähnt, unter einem Winkel α = 45° zur nach außen gerichteten Horizontalen steht. Dieser Spiegel 17 ist zwischen zwei Prismen 18 und 19 aus optischem Glas angeordnet, deren Grundflächen 18.1 und 19.1 parallel zueinander in einem vorgegebenen Abstand verlaufen, so daß ein Zwischenraum entsteht, in welchem der Spiegel 17 liegt. Diese Ausführungsform hat zunächst den Vorteil, daß auch das Ausblickteil 13 mit optischem Glas ausgefüllt ist und somit einen verstärkten Schutz bildet. Um sowohl einen zum Einblickteil verlaufenden Strahlengang als auch einen zur Durchblicköffnung laufenden Strahlengang zu erhalten, sind mehrere in Fig. 4 dargestellte Varianten möglich.

Zunächst ist es bei einer ersten Variante möglich, den Spiegel 17 wiederum als halbdurchlässigen Spiegel auszubilden, was zur Folge hat, daß beide Strahlengänge S-S1 und S-S2 gleichzeitig vorhanden sind.

Weiterhin ist es möglich, den Spiegel 17 als starres Plattenelement auszubilden, welches aus dem Zwischenraum zwischen den beiden Prismen 18 und 19 in Pfeilrichtung 53 herausziehbar ist, so daß der Strahlengang S-S1 unterbrochen und der Strahlengang S-S2 freigegeben wird.

Schließlich ist es auch möglich, den Spiegel 17 als aufrollbares Folienelement auszubilden, das um eine horizontale Drehachse 17.1 herum soweit aufgewickelt wird, daß der Strahlengang S-S1 unterbrochen und der Strahlengang S-S2 freigegeben ist.

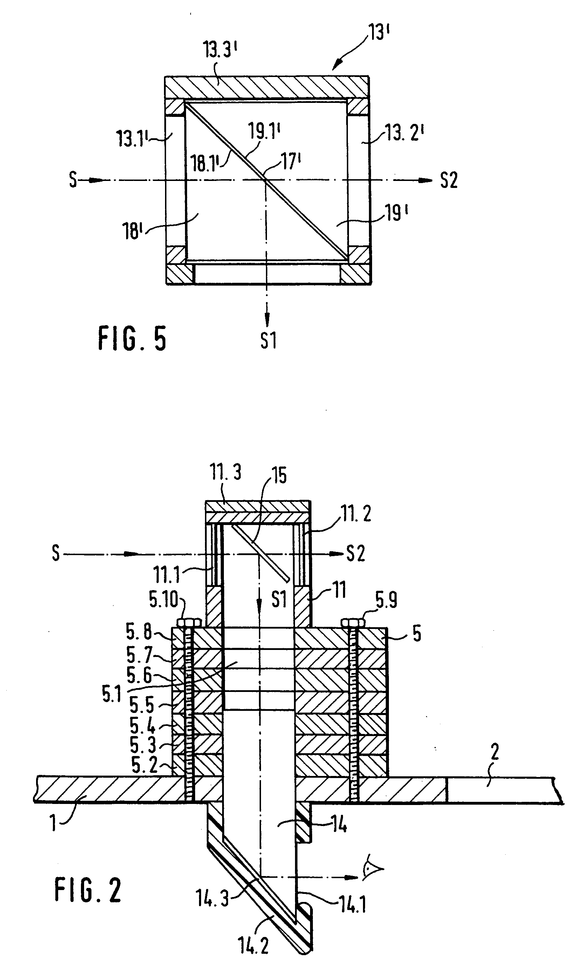

In Fig. 5 ist eine weitere Variante der Ausführungsform des Ausblickteils nach Fig. 4 dargestellt. In Fig. 5 sind die gleichen Bezugszeichen verwendet wie in Fig. 4 und mit einem "'" versehen.

Bei der Ausführungsform nach Fig. 5 ist, wie bereits oben erwähnt, der Spiegel 17' als halbdurchlässiger Spiegel ausgebildet, und zwar als Teil eines üblichen Strahlteilers. Zu diesem Zweck sind innerhalb des Ausblickteils 13' mit der Ausblicköffnung 13.1', der Durchblicköffnung 13.2' und dem Deckel 13.3' zwei Prismen 18' und 19' mit ihren Grundflächen 18.1' und 19.1' direkt aneinandergesetzt, wobei die Grundflächen so verspiegelt sind, daß an der Trennstelle ein halbdurchlässiger Spiegel 17' entsteht. Auf diese Weise sind auch bei dieser Ausführungsform beide Strahlengänge S-S1 und S-S2 gleichzeitig vorhanden.

## Patentansprüche

1. Kampffahrzeug, insbesondere Kampfpanzer, mit einer im gepanzerten Gehäusedach (1) des Fahrzeugs angeordneten Luke (2), bei dem in der unmittelbaren Umgebung der Luke Winkelspiegel angeordnet sind, die jeweils ein im Außenraum angeordnetes Ausblickteil (11, 12, 13) und ein im Innenraum des Fahrzeugs angeordnetes Einblickteil (14) aufweisen, wobei zwischen Ausblickteil und Einblickteil ein durch das Gehäusedach (1) geführter Sichtkanal (5.1) für den optischen Strahlengang angeordnet ist, wobei der Sichtkanal (5.1) innerhalb eines auf das Gehäusedach (1) aufgesetzten Schutzblockes (5) aus passivem Material verläuft und mindestens auf einem Teil seiner Länge mit optischem Glas ausgefüllt ist, an den sich das Einblickteil (14) unmittelbar anschließt, während das Ausblickteil (11, 12, 13) an der Oberseite des Schutzblockes (5) aufgesetzt ist, dadurch gekennzeichnet, daß das Ausblickteil (11, 12, 13) die Form eines jeweils auf den Schutzblock (5) aufgesetzten, an seiner Oberseite verschlossenen Tubus besitzt, der in seiner Seitenwand eine nach außen gerichtete Ausblicköffnung (11.1, 12.1, 13.1) und eine zur Luke (2) hin gerichtete Durchblicköffnung (11.2, 12.2, 13.2) aufweist und in dem ein im Strahlengang des Winkelspiegels liegender Spiegel (15, 16, 17) angeordnet ist.

2. Kampffahrzeug nach Anspruch 1, dadurch gekennzeichnet, daß der Spiegel (15, 17) als halbdurchlässiger Spiegel ausgebildet ist derart, daß ein erster Strahlengang (S-S1) von der Ausblicköffnung (11.1, 13.1) des Ausblickteils (11, 13) zur Einblicköffnung (14.1) des Einblickteils (14) und ein zeiter Strahlengang (S-S2) von der Ausblicköffnung (11.1, 13.1) des Ausblickteils (11, 13) zur Durchblicköffnung (11.2, 13.2) des Ausblickteils (11, 13) verläuft.

3. Kampffahrzeug nach Anspruch 1, dadurch gekennzeichnet, daß der Spiegel (16) um eine horizontale Achse (16.1, 16.2) schwenkbar ausgebildet ist derart, daß er aus einer ersten Position, in der er als Umlenkspiegel im Strahlengang (S-S1) von der Ausblicköffnung (12.1) des Ausblickteils (12) zur Einblicköffnung (14.1) des Einblickteils (14) liegt, in eine zweite Position (16', 16") kippbar ist, in der er den Durchblick von der Durchblicköffnung (12.2) zur Ausblicköffnung (12.1) des Ausblickteils (12) freigibt.

4. Kampffahrzeug nach Anspruch 1 od 2, dadurch gekennzeichnet, daß im Ausblickteil (13) zwei Prismen (18, 19) aus optischem Glas einander gegenüberliegend derart angeordnet sind, daß ihre Grundflächen (18.1, 19.1) mit einem Zwischenraum vorgegebener Breite parallel zueinander und unter einem vorgegebenen spitzen Winkel (α) zur Horizontalen in Richtung nach außen verlaufen und der Spiegel (17) im Zwischenraum angeordnet ist.

5. Kampffahrzeug nach Anspruch 4, dadurch gekennzeichnet, daß der Spiegel (17) in den Zwischenraum zwischen den Prismen (18, 19) einschiebbar ist.

6. Kampffahrzeug nach Anspruch 5, dadurch gekennzeichnet, daß der Spiegel (17) als starres Plattenelement ausgebildet ist.

7. Kampffahrzeug nach Anspruch 5, dadurch gekennzeichnet, daß der Spiegel (17) als aufrollbares Folienelement ausgebildet ist.

8. Kampffahrzeug nach Anspruch 4, dadurch gekennzeichnet, daß der Spiegel (17') Teil eines aus zwei Prismen (18', 19') ausgebildeten Strahlteilers ist.
